Europäisches Patentamt

European Patent Office

Office européen des brevets

(19)

(11) Veröffentlichungsnummer: **0 313 098 B1**

(12)  # EUROPÄISCHE PATENTSCHRIFT

(45) Veröffentlichungstag der Patentschrift: **17.06.92**

(51) Int. Cl.5: **B60R 22/46**, F16D 41/18

(21) Anmeldenummer: **88117690.3**

(22) Anmeldetag: **24.10.88**

(54) Sicherheitsgurt-Strammvorrichtung.

(30) Priorität: **23.10.87 DE 3735947**

(43) Veröffentlichungstag der Anmeldung:
**26.04.89 Patentblatt 89/17**

(45) Bekanntmachung des Hinweises auf die
Patenterteilung:
**17.06.92 Patentblatt 92/25**

(84) Benannte Vertragsstaaten:
**DE ES FR GB IT SE**

(56) Entgegenhaltungen:
**DE-C- 3 131 637**
**GB-A- 2 180 734**
**US-A- 4 664 334**

(73) Patentinhaber: **Autoliv-Kolb GmbH & Co.**
**Theodor-Heuss-Strasse 2**
**W-8060 Dachau(DE)**

(72) Erfinder: **Knabel, Walter, Dr.**
**Nockstrasse 13**
**W-8110 Murnau(DE)**
Erfinder: **Mayer, Josef**
**Eschenstrasse 86**
**W-8044 Unterschleissheim(DE)**

(74) Vertreter: **Zinnecker, Armin, Dipl.-Ing. Lorenz-**
**Seidler-Gossel et al**
**Widenmayerstrasse 23**
**W-8000 München 22(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Rotationsgurtstrammer für einen Sicherheitsgurtautomaten mit einem durch einen Crash auslösbaren Energiespeicher, einer durch den Energiespeicher betätigbaren und als Gurtstrammerantrieb dienenden Rolle und einem koaxial zu dieser angeordneten Käfig, in dem radial bewegliche Klemmstücke gehalten sind, die den Käfig und die Rolle miteinander kuppeln und die durch eine relative Drehung der Rolle relativ zum Käfig in formschlüssigen Eingriff mit der Gurtwickelachse gelangen.

Bei im Fahrzeug angeschnallten Personen ist immer eine gewisse Gurtlose vorhanden. Kommt es zu einem Unfall, so hat der Körper des Insassen den der Gurtlose entsprechenden Raum zu Verfügung, um sich ungehindert nach vorne zu bewegen. Erst dann setzt die Wirkung des Gurtes ein. Da das Blockiersystem eines Sicherheitsgurtes zusätzlich eine gewisse Trägheit aufweist, und auch das Gurtband dehnbar ist, kann es vorkommen, daß trotz angelegtem Sicherheitsgurt der Körper des Insassen so weit nach vorne bewegt wird, daß der Kopf entweder gegen Scheibe oder Lenkrad geschleudert wird.

Rückstrammer der hier beschriebenen Art werden dazu benützt, die vorhandene Gurtlose zu beseitigen, bevor sich der Körper des Insassen nach vorne bewegt, und den Vorfall des Körpers dadurch soweit zu begrenzen, daß diese Gefahren sicher verhindert werden.

Aus der DE-C-31 31 637 ist ein Rückstrammer für Sicherheitsgurtautomaten mit einem im Crash-Fall auslösbaren Kraftspeicher bekannt, der über ein flexibles Zugmittel mit einer Zugmittelrolle verbunden ist, die bei Normalbetrieb von der Gurtwelle entkoppelt ist und nach Auslösen des Kraftspeichers mittels einer Kupplung aus an ihr gelagerten. radial in Richtung eines Kupplungsansatzes der Gurtweile bewegbaren Kupplungselementen mit der Gurtwelle kuppelbar ist. In den Figuren 10 - 13 ist eine Ausführungsform beschrieben, in der die Kupplungselemente als Walzkörper ausgebildet sind, die sich in einem Käfig aus thermoplastischem Kunststoff befinden. Die Zugmittelrolle ist an ihrer Innenseite mit Steuerbahnen versehen, an denen die Walzkörper geführt werden. Der Käfig ist mit Hilfe von Scheerstiften an der Seitenplatte des Automaten befestigt. Im Aktivierungsfall wirkt auf die Zugmittelrolle ein Drehmoment, das zu einer Drehung der Rolle relativ zur Seitenwand und dem damit verbundenen Käfig führt.

Die Walzkörper bewegen sich dabei entlang der Steuerbahnen bis zum Kraftschluß mit dem Wellenzapfen. Durch das nun auch auf den Käfig wirkende Drehmoment werden die Scheerstifte abgerissen, und der Strammvorgang wird eingeleitet.

Bei dem beschriebenen Rückstrammer ergiebt sich nun das Problem, daß insbesondere nach der Produktion keine Funktionsprüfung durgeführt werden kann, da bei einer solchen Prüfung die Scheerstifte abreißen und somit die gesamte Einrichtung untauglich werden würde.

Es ist Aufgabe der Erdindung, eine Gurtstrammvorrichtung zu schaffen, die diese Nachteile vermeidet und bei der die Funktionssicherheit des Systems jederzeit überprüfbar ist.

Diese Aufgabe wird erfindungsgemäß dadurch gelöst, daß der Käfig durch Einrichtungen in seiner Lage gehalten wird, die bei einer Aktivierung der Strammvorrichtung nicht zerstört werden. Die Freigabe des Käfigs zur Drehung läßt sich entweder kraftabhängig oder aber abhängig vom Drehwinkel der Rolle steuern.

Gemäß einer ersten Lösung wird der eingangs genannte Rotationsgurtstrammer erfindungsgemäß dadurch weitergebildet, daß Mittel zur Verhinderung einer Drehung des Käfigs relativ zum ortsfesten Verkleidungsgehäuse der Gurtstrammerrolle vorgesehen sind, die durch Drehung der Rolle gesteuert werden, um nach einem vorherbestimmten Drehwinkel der Rolle relativ zum Käfig ihre Lage so zu verändern, daß der Käfig freigegeben wird und sich mit der Rolle drehen kann.

Gemäß einer zweiten Lösung wird der eingangs genannte Rotationsgurtstrammer erfindungsgemäß dadurch weitergebildet, daß federkraftbeaufschlagte Mittel am Käfig oder am ortsfesten Verkleidungsgehäuse der Gurtstrammerrolle vorgesehen sind, die mit einer vorherbestimmten Kraft eine Drehung des Käfigs relativ zum ortsfesten Verkleidungsgehäuse der Gurtstrammerrolle verhindern und den Käfig freigeben, sobald das auf ihn wirkende Drehmoment diese Kraft übersteigt.

Eine alternative Lösung der Aufgabe ergibt sich durch Weiterbildung eines eingangs genannten Rotationsgurtstrammers dadurch, daß der Käfig durch Reibschluß zum ortsfesten Verkleidungsgehäuse der Gurtstrammerrolle so lange in seiner Stellung gehalten wird, bis das auf ihn einwirkende Drehmoment die Haftreibung übersteigt.

Schließlich besteht eine Lösung der vorgenannten Aufgabe darin, daß der eingangs genannte Rotationsgurtstrammer, dessen Welle angehoben wird, um in die blockierte Stellung zu gelangen, dadurch weitergebildet ist, daß die beweglichen Klemmstücke verschiedene Längen aufweisen und die Rolle mit Rampen unterschiedlicher Schräge versehen ist, an denen die Klemmstücke geführt sind.

Weitere bevorzugte Ausführungsbeispiele ergeben sich aus den an die unabhängigen Ansprüche anschließenden Unteransprüche.

Im folgenden wird die Erfindung anhand von Zeichnungen näher erläutert.

Es zeigt:

Figur 1      eine Explosionszeichnung eines erfindungsgemäßen Rotationsstrammers

Figur 2      eine Vorderansicht des Gegenstandes aus Figur 1 - ohne Gehäusedeckel und Federkassette

Figur 3-5, 7      aufgebrochene Darstellungen von Seilrolle und Käfig in verschiedenen Ausführungsbeispielen

Figur 6      ein weiteres Ausführungsbeispiel in anderer Ansicht

Figur 8      einen Schnitt durch Seilrolle und Käfig mit einer erfindungsgemäßen Zentriervorrichtung

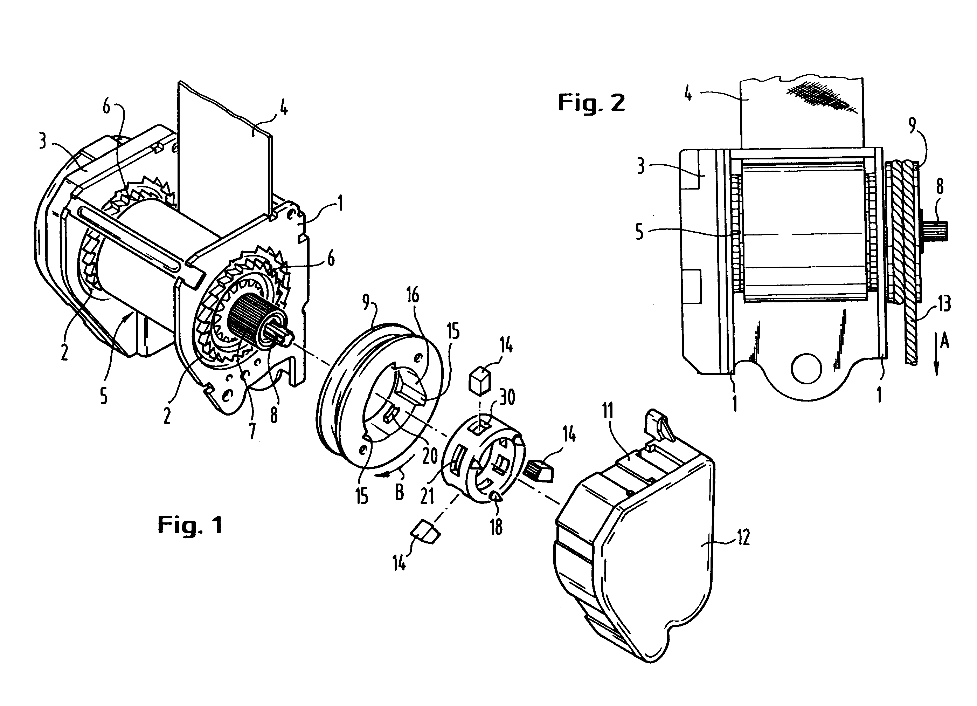

In Figur 1 ist ein herkömmlicher, radial sperrender Sicherheitsgurtautomat gezeigt. In einem U-förmig gebogenen Rahmenblech 1 befinden sich zwei Ausnehmungen 2, die an ihrer Oberseite gezahnt ausgebildet sind. An die eine Seite des Rahmens 1 ist ein Gehäuse 3 angebracht, das den oder die üblichen Sensoren enthält. Das Gurtband 4 ist auf der Spule 5 aufgewickelt. Die Spule 5 ist an beiden Seiten fest mit gezahnten Scheiben 6 verbunden. Die Achse der Spule 5 ist so gelagert, daß sie von hier nicht gezeigten Federn in ihrer Neutralstellung gehalten wird und gegen diese Federkraft so nach oben gezogen werden kann, daß die Zahnung der Scheiben 6 in die Zahnung des Rahmenbleches 1 eingreift. In axialer Richtung schließt sich an die Spule 5 noch eine feingezahnte Welle 7 und eine im Durchmesser etwas kleinere, grobgezahnte Welle 8 an. Diese Seite der Rotationsstrammvorrichtung wird mit einem Gehäuse 11 und einer Federkassette 12 verschlossen. Eine Seilrolle 9 und ein Käfig 10 sind in der Ruhestellung so in dem Gehäuse 11 montiert, daß sie sich gegenüber diesem nicht verdrehen lassen, daß sich aber die feingezahnte Welle 7 frei bewegen kann. Die grobgezahnte Welle 8 ist fest mit der Feder in der Kassette 12 verbunden. Auf der Seilrolle 9 ist das Seil 13 (Fig. 2) aufgewickelt, das zu einem hier nicht dargestellten beliebigen Energiespeicher führt. Im Käfig 10 sind die Klemmkeile 14 gelagert, so daß ihre Rückseiten sich in die Ausnehmungen 15 der Seilrolle 9 erstrecken.

Wird nun bei einem Unfall der Energiespeicher ausgelöst, so wirkt auf das Seil eine Kraft in Richtung des Pfeiles A (Fig. 2) und die Seilrolle 9 beginnt sich in Richtung des Pfeiles B zu drehen. Der Käfig 10 wird dabei durch später beschriebene Einrichtungen in seiner Ruhestellung drehfest zum Gehäuse 11 gehalten. Die Klemmkeile 14 gleiten dabei an den schrägen Rampen 16 entlang und werden dadurch zur Mitte gedrückt. Sobald sie sich in Formschluß mit der feingezahnten Welle 7 befinden, wird der Käfig 10 aus seiner drehfesten Arretierung freigegeben. Es sind nun die Spule 5, die Seilrolle 9 und der Käfig 10 in Drehrichtung des Pfeiles B fest miteinander verbunden. Bei weiterer Krafteinwirkung auf das Seil 13 in Pfeilrichtung A dreht sich nun auch die Spule 5 und wickelt den Gurt 4 auf.

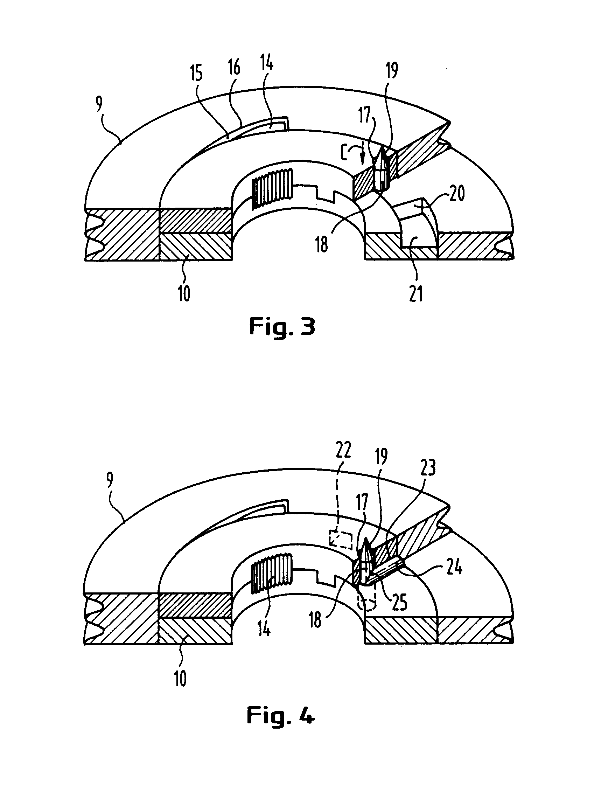

Das Ausführungsbeispiel nach Anspruch 2 ist in Figur 1 und 3 näher beschrieben. Der Käfig 10 ist mit achsparallelen Bohrungen 17 versehen, in denen Stifte 18 geführt sind. Die Stifte 18 ragen auf hier nicht dargestellte Weise in Ausnehmungen des Gehäuses 11. Dieses Ende der Stifte ist als Spitze 19 ausgebildet. Die Seilrolle 9 ist an ihrer Innenseite mit kreissektorförmigen Ansätzen 20 versehen, die in Ausnehmungen 21 des Käfigs 10 geführt sind. In der Ruhestellung befinden sich die Ansätze 20 direkt unter den Bohrungen 17, so daß die Stifte 18 in ihrer Stellung gehalten werden. Dreht sich nun die Seilrolle 9 gegenüber dem Käfig 10, so drücken die Rampen 16 die Klemmkeile 14 zur Mitte hin. Liegen die Klemmkeile 14 an der Welle 7 an, so entsteht ein Drehmoment, das auf den Käfig 10 wirkt. Bedingt durch dieses Drehmoment und ihre Spitze 19 sind die Stifte 18 bestrebt, sich in Richtung des Pfeiles C zu bewegen. Sobald daher die Ansätze 20 die Stifte 18 freigeben, ziehen sich diese in die Ausnehmung 21 zurück. Der Käfig 10 ist nun gegenüber dem Gehäuse 11 frei drehbar.

In der Figur 4 ist ein weiteres Ausführungsbeispiel dargestellt. Hier ist zusätzlich zum Stift 18 und der axialen Bohrung 17 eine weitere radiale Bohrung 23 und ein Stift 24 vorgesehen. Es ist gestrichelt angedeutet, daß die Bohrung 17 länger ist als in Figur 3 dargestellt. Die Stifte 18 und 24 sind an den Enden, an denen sie sich berühren, mit einer 45°-Schräge 25 versehen.

Sind bei einer Drehung der Seilrolle 9 die Klemmkeile 14 voll eingesteuert, so kann sich der Stift 24 in die Ausnehmung 22 in der Seilrolle zurückziehen und gibt somit den Stift 18 frei. Dieser kann sich nun vollkommen in die Bohrung 17 zurückziehen und die Arretierung des Käfigs 10 lösen.

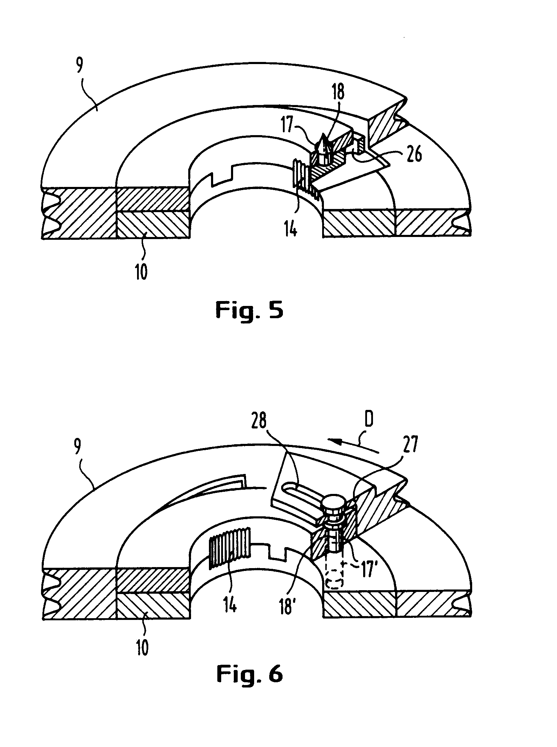

Ein weiteres Ausführungsbeispiel ist in Figur 5 beschrieben. Hier wird die Steuerung des Stiftes 18 direkt vom Klemmkeil 14 übernommen. Wenn der Klemmkeil voll eingesteuert ist, fluchtet die Bohrung 26 im Klemmkeil mit der Bohrung 17 im Käfig 10. Der Stift 18 kann sich dann zurückziehen und den Käfig 10 freigeben.

In der Figur 6 sind Seilrolle 9 und Käfig 10 so dargestellt, daß die Seite, die dem Aufrollautomaten zugewandt ist, nach oben zeigt. An der Rolle 9 ist ein Ansatz 27 mit einer Führungsrille 28 angeformt. Der Stift 18' ist so geformt, daß er in der Rille geführt wird. Die Bohrung 17' ist durch den Käfig 10 durchgehend. Der Ansatz 27 ist in Pfeilrichtung D ansteigend ausgebildet, so daß bei einer Drehung der Seilrolle 9 der Stift 18′ angehoben wird. Es besteht die Möglichkeit, den Ansatz 27 gerade auszubilden, so daß die Führung 28 immer den gleichen Abstand vom Käfig 10 hat. Die Seilrolle 9 muß dann durch eine nicht näher dargestellte Vorrichtung bei ihrer Drehung axial verschoben werden, so daß sich ihr Abstand zum Gehäuse 11 (Fig 1) vergrößert.

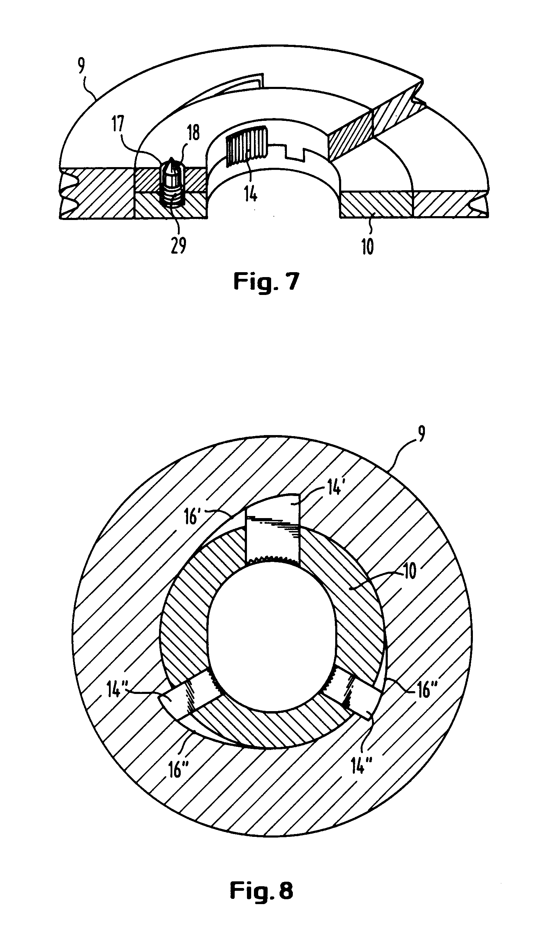

Die Steuerung der Haltestifte 18 muß jedoch nicht wegabhängig, sondern kann auch kraftabhängig erfolgen. Ein Beispiel ist in Figur 7 gezeigt. Hier sitzt der Stift 18 in der Bohrung 17 auf einer Feder 29 auf. Ist der Klemmkeil 14 voll eingesteuert, wirkt ein Drehmoment auf den Käfig 10. Wird dieses Drehmoment so groß, daß die resultierende Kraft, die den Stift 18 entgegen der Feder 29 nach unten in die Bohrung 17 drückt, größer als die Federkraft, so zieht sich der Stift 18 in die Bohrung 17 zurück und gibt den Käfig 10 frei.

Auch läßt sich der Käfig über Reibungskräfte drehfest mit dem Gehäuse verbinden. Hierzu kann die entsprechende Seite des Käfigs z.B. mit radialen Rillen oder einem speziellen Belag mit großem Reibungskoeffizienten versehen sein. Auch hier läßt sich der Käfig gegenüber dem Gehäuse erst dann drehen, wenn das auf ihn wirkende Drehmoment größer als die Reibungskräfte zwischen Käfig und Gehäuse ist.

Soll die erfindungsgemäße Vorrichtung bei einem Sicherheitsgurtautomaten mit radial sperrender Hubwelle verwendet werden, wie er in Fig. 1 dargestellt ist, muß die Welle vor dem Strammvorgang zentriert werden. Hierzu sind die Rampen 16 in der Seilrolle 9 unterschiedlich ausgebildet (Fig. 8). Die Rampe 16′, die sich oben in der Nähe der Rahmenverzahnung befindet, ist höher und steiler ausgebildet als die unteren beiden Rampen 16″.

Auch der dazugehörige Klemmkeil 14′ ist länger als die übrigen Klemmkeile 14″. Dies hat zur Folge, daß der obere Klemmkeil bei gleichem Drehwinkel der Seilrolle einen größeren Weg in Richtung Mittelachse zurücklegt als die beiden anderen Klemmkeile. Die Spule 5 wird dadurch in einer zentrierten Lage fixiert oder, falls sie sich in Blockierstellung befand, in diese Lage gebracht, so daß sie sich während des Strammvorganges ungehindert drehen kann.

Abschließend soll noch erwähnt werden, daß die Vorrichtungen nach den Fig. 1, 3 bis 5 und 7 nicht auf die Verwendung von Stiften beschränkt ist, sondern ebenso z.B. Kugeln zur Anwendung kommen können.

**Patentansprüche**

1. Rotationsgurtstrammer für einen Sicherheitsgurtautomaten mit einem durch einen Crash auslösbaren Energiespeicher, einer durch den Energiespeicher betätigbaren und als Gurtstrammerantrieb dienenden Rolle (9) und einem koaxial zu dieser angeordneten Käfig (10), in dem radial bewegliche Klemmstücke (14) gehalten sind, die den Käfig (10) und die Rolle (9) miteinander kuppeln und die durch eine relative Drehung der Rolle (9) relativ zum Käfig (10) in formschlüssigen Eingriff mit der Gurtwickelachse (7) gelangen,
**dadurch gekennzeichnet,**
daß Mittel zur Verhinderung einer Drehung des Käfigs (10) relativ zum ortsfesten Verkleidungsgehäuse (11) der Gurtstrammerrolle vorgesehen sind, die durch Drehung der Rolle (9) gesteuert werden, um nach einem vorherbestimmten Drehwinkel der Rolle (9) relativ zum Käfig (10) ihre Lage so dern, daß der Käfig (10) freigegeben wird und sich mit der Rolle (9) drehen kann.

2. Rotationsgurtstrammer nach Anspruch 1, dadurch gekennzeichnet, daß Stifte (18) in achsparallelen Bohrungen (17) des Käfigs (10) geführt sind und durch kreissektorförmige Ansätze (20) der Rolle (9), die in den Käfig (10) hineinragen und einen Teil der Bohrungen (17) abdecken, so lange in ihrer Sperrstellung gehalten werden, bis die Ansätze die Bohrungen (17) ganz freigeben und diese die Stifte (18) aufnehmen.

3. Rotationsgurtstrammer nach Anspruch 1, dadurch gekennzeichnet, daß erste Stifte (18) in achsparallelen Bohrungen (17) des Käfigs (10) geführt sind und daß zweite Stifte (24), die in radialen Bohrungen (23) des Käfigs (10) geführt sind, die ersten Stifte (18) in ihrer Sperrlage halten, bis Ausschnitte in der Rolle (9) mit den radialen Bohrungen (23) des Käfigs (10) fluchten.

4. Rotationsgurtstrammer nach Anspruch 3, dadurch gekennzeichnet, daß die ersten (18) und zweiten (24) Stifte an ihren jeweiligen Berührungsenden mit einer 45°-Schräge (25) versehen sind.

5. Rotationsgurtstrammer nach Anspruch 1, dadurch gekennzeichnet, daß Stifte (18) in achsparallelen Bohrungen (17) des Käfigs (10) geführt werden und durch die beweglichen Klemmstücke (14) so lange in ihrer Sperrlage gehalten werden, bis die Klemmstücke (14) eingesteuert sind und Bohrungen (26) in den Klemmstücken die Stifte (18) vollkommen aufnehmen.

6. Rotationsgurtstrammer nach einem der Ansprüche 1-5, dadurch gekennzeichnet, daß die Stifte (18) an dem Ende, an dem sie in das Gehäuse eingreifen konisch zulaufen.

7. Rotationsgurtstrammer nach Anspruch 1, dadurch gekennzeichnet, daß in achsparallelen Bohrungen (17) des Käfigs (10) geführte Stifte über eine Kulisse gesteuert werden, die mit der Rolle (9) verbunden ist.

8. Rotationsgurtstrammer nach Anspruch 7, dadurch gekennzeichnet, daß die Kulisse mit einer Schräge versehen ist.

9. Rotationsgurtstrammer nach Anspruch 7, dadurch gekennzeichnet, daß die Kulisse parallel zur Stirnfläche des Käfigs (10) ausgebildet ist und daß sich die Rolle (9) bei ihrer Drehung durch eine Zwangssteuerung in axialer Richtung relativ zum Käfig (10) verschiebt.

10. Rotationsgurtstrammer für einen Sicherheitsgurtautomaten mit einem durch einen Crash auslösbaren Energiespeicher, einer durch den Energiespeicher betätigbaren und als Gurtstrammerantrieb dienenden Rolle (9) und einem koaxial zu dieser angeordneten Käfig (10), in dem radial bewegliche Klemmstücke (14) gehalten sind, die den Käfig (10) und die Rolle (9) miteinander kuppeln und die durch eine relative Drehung der Rolle (9) relativ zum Käfig (10) in formschlüssigem Eingriff mit der Gurtwickelachse (7) gelangen, dadurch gekennzeichnet, daß federkraftbeaufschlagte Mittel am Käfig (10) oder am ortsfesten Verbindungsgehäuse (11) der Gurtstrammerrolle vorgesehen sind, die mit einer vorbestimmten Kraft eine Drehung des Käfigs (10) relativ zum ortsfesten Verbindungsgehäuse (11) der Gurtstrammerrolle verhindern und den Käfig (10) freigeben, sobald das auf ihn wirkende Drehmoment diese Kraft übersteigt.

11. Rotationsgurtstrammer nach Anspruch 2, 3, 5 oder 10, dadurch gekennzeichnet, daß anstatt der Stifte Kugeln verwendet werden.

12. Rotationsgurtstrammer für einen Sicherheitsgurtautomaten mit einem durch einen Crash auslösbaren Energiespeicher, einer durch den Energiespeicher betätigbaren und als Gurtstrammerantrieb dienenden Rolle (9) und einem koaxial zu dieser angeordneten Käfig (10), in dem radial bewegliche Klemmstücke (14) gehalten sind, die den Käfig (10) und die Rolle (9) miteinander kuppeln und die durch eine relative Drehung der Rolle (9) relativ zum Käfig (10) in formschlüssigen Eingriff mit der Gurtwickelachse (7) gelangen, dadurch gekennzeichnet daß, der Käfig (10) durch Reibschluß zum ortsfesten Verkleidungsgehäuse (11) der Gurtstrammerrolle so lange in seiner Stellung gehalten wird, bis das auf ihn einwirkende Drehmoment die Haftreibung übersteigt.

13. Rotationsgurtstrammer für einen Sicherheitsgurtautomaten mit einem durch einen Crash auslösbaren Energiespeicher, einer durch den Energiespeicher betätigbaren und als Gurtstrammerantrieb dienenden Rolle (9) und einem koaxial zu dieser angeordneten Käfig (10), in dem radial bewegliche Klemmstücke (14) gehalten sind, die den Käfig (10) und die Rolle (9) miteinander kuppeln und die durch eine relative Drehung der Rolle (9) relativ zum Käfig (10) in formschlüssigen Eingriff mit der Gurtwickelachse (7) gelangen, dessen Welle angehoben wird, um in die blockierte Stellung zu gelangen, dadurch gekennzeichnet, daß die beweglichen Klemmstücke (14) verschiedene Längen aufweisen und die Rolle (9) mit Rampen (16', 16'') unterschiedlicher Schräge versehen ist, an denen die Klemmstücke (14', 14'') geführt sind.

14. Rotationsgurtstrammer nach Anspruch 13, dadurch gekennzeichnet, daß die Wickelachse (7) im Eingriffsbereich der Klemmstücke (14) radiale Rippen aufweist.

15. Rotationsgurtstrammer nach Anspruch 13 oder 14, dadurch gekennzeichnet, daß die Klemmstücke (14) an ihrer Innenseite so ausgebildet sind, daß im Crash-Fall mit den radialen Rippen der Wickelachse (7) ein Formschluß stattfindet.

**Claims**

1. Rotary belt tightener for a safety belt device, with an energy storage means releasable by a crash, with a roller (9) actuatable by the energy storage means and serving as a belt tightener drive, and a cage (10) arranged coaxially thereto, in which radially movable clamping elements (14) are carried intercoupling the cage (10) and the roller (9) and positively interlocking with the belt winding axis (7) by a relative rotation of the roller (9) relative to the cage (10),

**characterized in**

that means for preventing a rotation of the cage (10) relative to the stationary protective housing (11) of the belt tightener roller are provided which are controlled by rotation of the roller (9) to change their position in accordance with a predetermined angle of rotation of the roller (9) relative to the cage (10) in such a manner that the cage (10) is released and is rotatable together with the roller (9).

2. Rotary belt tightener according to claim 1, characterized in that pins (18) are guided in bores (17) of the cage (10), said bores (17) being parallel to the axis, and held in their locking position by circular sector-shaped shoulders (20) of the roller (9) extending into the cage (10) and covering a part of the bores (17) until the shoulders release the bores (17) completely and the pins (18) are received by them.

3. Rotary belt tightener according to claim 1, characterized in that first pins (18) are guided in bores (17) of the cage (10), said bores (17) being parallel to the axis, and that second pins (24), which are guided in radial bores (23) of the cage (10), hold the first pins (18) in their locking position until the cutouts in the roller (9) align with the radial bores (23) of the cage (10).

4. Rotary belt tightener according to claim 3, characterized in that the first (18) and second (24) pins are provided with a 45° slope (25) at their respective ends of contact.

5. Rotary belt tightener according to claim 1, characterized in that pins (18) are guided in bores (17) of the cage (10), said bores (17) being parallel to the axis, and held in their locking position by the movable clamping elements (14) until the clamping elements (14) are in their position and the pins (18) are completely received in the bores (26) of the clamping elements.

6. Rotary belt tightener according to anyone of claims 1 through 5, characterized in that the pins (18) have a tapered form at their end engaging the housing.

7. Rotary belt tightener according to claim 1, characterized in that pins guided in bores (17) of the cage (10), said bores (17) being parallel to the axis, are controlled by means of a crank which is connected with the roller (9).

8. Rotary belt tightener according to claim 7, characterized in that the crank is provided with a bevelling.

9. Rotary belt tightener according to claim 7, characterized in that the crank is formed in parallel to the front surface of the cage (10) and that the roller (9) is displaced in axial direction relative to the cage (10) on rotation by means of a forced control.

10. Rotary belt tightener for a safety belt device with an energy storage means releasable by a crash, with a roller (9) actuatable by the energy storage means and serving as belt tightener drive, and a cage (10) coaxially arranged thereto, in which radially movable clamping elements (14) are carried intercoupling the cage (10) and the roller (9) and interlocking with the belt winding axis (7) by a relative rotation of the roller (9) relative to the cage (10), characterized in that spring-tensioned means are provided at the cage (10) or at the stationary protective housing (11) of the belt tightener roller, which prevent a rotation of the cage (10) relative to the stationary protective housing (11), of the belt tightener roller with a predetermined force and release the cage (10) as soon as the torque acting thereupon exceeds said force.

11. Rotary belt tightener according to claim 2, 3, 5 or 10, characterized in that balls are used instead of the pins.

12. Rotary belt tightener for a safety belt device with an energy storage means releasable by a crash, a roller (9) actuatable by the energy storage means and serving as a belt tightener drive, and a cage (10) arranged coaxially thereto, in which radially movable clamping elements (14) are carried intercoupling the cage (10) and the roller (9) and positively interlocking with the belt winding axis (7) by a relative rotation of the roller (9) relative to the cage (10),
characterized in
that the cage (10) is held by friction in its position to the stationary protective housing (11) of the belt tightener roller until the torque acting thereupon exceeds the static friction.

13. Rotary belt tightener for a safety belt device with an energy storage means releasable by a crash, a roller (9) actuatable by the energy storage means and serving as belt tightener drive, and a cage (10) coaxially arranged thereto, in which the radially movable clamping elements (14) are held intercoupling the cage (10) and the roller (9) and positively interlocking with the belt winding axis (7) by a relative rotation of the roller (9) relative to the cage (10), the shaft of which is lifted to reach the locked position,
characterized in
that the movable clamping elements (14) have different lengths and that the roller (9) is provided with ramps (16', 16'') of a different bevelling, at which the clamping elements (14', 14'') are guided.

14. Rotary belt tightener according to claim 13, characterized in that the winding axis (7) is provided with radial ribs in the section of contact of the clamping elements (14).

15. Rotary belt tightener according to claim 13 or 14, characterized in that the clamping elements (14) are designed at their inner side such that in case of a crash a positive locking with the radial ribs of the winding axis (7) occurs.

**Revendications**

1. Dispositif tendeur rotatif de ceinture pour un appareil automatique formant ceinture de sécurité comprenant un réservoir d'énergie pouvant être déclenché par une collision, une poulie (9) servant d'entraînement du dispositif tendeur de ceinture et pouvant être actionnée par l'intermédiaire du réservoir d'énergie ainsi qu'une cage (10) disposée de façon coaxiale à celle-ci, dans laquelle sont maintenues des pièces de serrage mobiles dans le sens radial accouplant la cage (10) et la poulie (9) l'une à l'autre, et qui, par une rotation relative de la poulie (9) par rapport à la cage (10) viennent en prise par concordance des formes avec l'axe d'enroulement de ceinture (7), caractérisé en ce que des moyens sont prévus pour empêcher une rotation de la cage (10) relativement au boîtier de revêtement fixe (11) de la poulie de tension de ceinture qui sont commandées par la rotation de la poulie (9), pour, après un angle de rotation prédéterminé de la poulie (9) relativement à la cage (10) modifier leur position de façon que la cage (10) soit libérée et puisse tourner avec la poulie (9).

2. Dispositif tendeur rotatif de ceinture selon la revendication 1, caractérisé en ce que des broches (18) sont guidées dans des alésages (17) parallèles à l'axe de la cage (10) et, par l'intermédiaire d'épaulements en forme de secteur de cercle (20) de la poulie (9) qui font saillie dans la cage (10) et recouvrent une partie des alésages (17), sont maintenus dans leur position de blocage aussi longtemps jusqu'à ce que les épaulements libèrent complètement les alésages (17) et que ceux-ci reçoivent les broches (18).

3. Dispositif tendeur rotatif de ceinture selon la revendication 1, caractérisé en ce que des premières broches (18) sont guidées dans des alésages parallèles à l'axe (17) de la cage (10), et que des deuxièmes broches (24) qui sont guidées dans les alésages radiaux (23) de la cage (10), qui maintiennent les premières broches (18) dans leur position de bloquage, jusqu'à ce que des découpes dans la poulie (9) soient alignées avec les alésages radiaux (23) de la cage (10).

4. Dispositif tendeur rotatif de ceinture selon la revendication 3, caractérisé en ce que les premières (18) et deuxièmes (24) broches, à leurs extrémités de contact respectives, sont pourvues d'un chanfrein (25) de 45°.

5. Dispositif tendeur rotatif de ceinture selon la revendication 1, caractérisé en ce que des broches (18) sont guidées dans des alésages parallèles à l'axe (17) de la cage (10) et sont maintenues dans leur position de bloquage par les pièces de serrage mobiles (14) aussi longtemps jusqu'à ce que les pièces de serrage (14) soient commandées pour être en positiion et que les alésages (26) dans les pièces de serrage aient reçu complètement les broches (18).

6. Dispositif tendeur rotatif de ceinture selon l'une des revendications 1-5, caractérisé en ce que les broches (18), à l'extrémité par laquelle elles viennent en prise dans le boîtier, sont coniques.

7. Dispositif tendeur rotatif de ceinture selon la revendication 1, caractérisé en ce que des broches guidées dans des alésages parallèles à l'axe (17) de la cage (10) sont commandées par l'intermédiaire d'une coulisse qui est reliée à la poulie (9).

8. Dispositif tendeur rotatif de ceinture selon la revendication 7, caractérisé en ce que la coulisse est pourvue d'un chanfrein.

9. Dispositif tendeur rotatif de ceinture selon la revendication 7, caractérisé en ce que la coulisse est réalisée de façon parallèle à la face frontale de la cage (10) et que la poulie (9), lors de sa rotation par une commande forcée se déplace dans la direction axiale relativement à la cage (10).

10. Dispositif tendeur rotatif de ceinture pour un appareil automatique de ceinture de sécurité comprenant un réservoir d'énergie pouvant être déclenché par une collision, une poulie (9) servant d'entraînement de tension de la ceinture et pouvant être actionnée par le réservoir d'énergie ainsi qu'une cage (10) disposée de manière coaxiale à celle-ci, dans laquelle sont maintenues des pièces de serrage mobiles dans le sens radial accouplant la cage (10) et la poulie (9) l'une à l'autre et qui viennent en prise par concordance des formes avec l'axe d'enroulement de ceinture (7) par l'intermédiaire d'une rotation relative de la poulie (9) relativement à la cage (10), caractérisé en ce que des moyens sollicités par des forces de ressort sont prévus sur la cage (10) ou sur le boîtier de liaison fixe (11) de la poulie de tension de la ceinture qui, par une force prédéterminée, empêche une rotation de la cage (10) relativement au boîtier de liaison fixe (11) de la poulie de tension de la ceinture et libèrent la cage (10) dès que le couple de rotation agissant sur celle-ci dépasse cette force.

11. Dispositif tendeur rotatif de ceinture selon la revendication 2, 3, 5 ou 10, caractérisé en ce que des billes sont utilisées à la place des broches.

12. Dispositif tendeur rotatif de ceinture pour un appareil automatique de ceinture de sécurité comprenant un réservoir d'énergie pouvant être déclenché par une collision, une poulie (9) servant d'entraînement de tension de la ceinture et pouvant être actionnée par le réservoir d'énergie ainsi qu'une cage (10) disposée coaxialement à celle-ci, dans laquelle sont maintenues des pièces de serrage (14) mobiles dans le sens radial accouplant la cage (10) et la poulie (9) l'une à l'autre et qui viennent en prise par concordance des formes avec l'axe d'enroulement de la ceinture (7) par l'intermédiaire d'une rotation relative de la poulie (9) relativement à la cage (10), caractérisé en ce que la cage (10) est maintenue par contact à friction dans sa position par rapport au boîtier de revêtement fixe (11) de la poulie de tension de la ceinture aussi longtemps, jusqu'à ce que le couple de rotation agissant sur celle-ci dépasse la friction par adhérence.

13. Dispositif tendeur rotatif de ceinture pour un appareil automatique de ceinture de sécurité comprenant un réservoir d'énergie pouvant être déclenché par une collision, une poulie (9) servant d'entraînement de tension de la ceinture de sécurité et pouvant être actionnée par le réservoir d'énergie ainsi qu'une cage (10) disposée coaxialement à celle-ci, dans laquelle sont maintenues des pièces de serrage (14) mobiles dans le sens radial accouplant la cage (10) et la poulie (9) l'une à l'autre et qui viennent en prise par concordance des formes avec l'axe d'enroulement de la ceinture (7) par l'intermédiaire d'une rotation relative de la poulie (9) relativement à la cage (10), axe d'enroulement de la ceinture, dont l'arbre est soulevé pour arriver dans la position de bloquage, caractérisé en ce que les pièces de serrage mobiles (14) ont des longueurs différentes, et que la poulie (9) est pourvue de rampes (16', 16") d'inclinaisons différentes sur lesquelles sont guidées les pièces de serrage (14', 14").

14. Dispositif tendeur rotatif de ceinture selon la revendication 13, caractérisé en ce que l'axe d'enroulement (7) présente des nervures radiales dans la zone d'engagement des pièces de serrage (14).

15. Dispositif tendeur rotatif de ceinture selon la revendication 13 ou 14, caractérisé en ce que les pièces de serrage (14) sont réalisées sur leur face interne de façon qu'il se produit une fermeture par engagement du à leurs formes dans un cas de collision, avec les nervures radiales de l'axe d'enroulement (7).

Fig. 1

Fig. 2

EP 0 313 098 B1

**Fig. 3**

**Fig. 4**

**Fig. 5**

**Fig. 6**

**Fig. 7**

**Fig. 8**